# EUROPEAN PATENT APPLICATION

(11) **EP 2 047 894 A1**
(43) Date of publication of application: **15.04.2009**
(21) Application number: 07790307.8
(22) Date of filing: 30.07.2007
(51) Int. Cl.: A63F 13/00, G06T 11/80

(54) **METHOD FOR CONTROLLING SELECTION OF OBJECTS DISPLAYED ON DISPLAY, GAME MACHINE USING SAME, AND PROGRAM FOR CONTROLLING EXECUTION OF THE METHOD**

(30) Priority: 01.08.2006 JP 2006210384
(71) Applicant: Sega Corporation, Tokyo 144-8531 (JP)
(72) Inventor: OGAWA, Takuya, Tokyo 144-8531 (JP); IGARASHI, Kaname, Tokyo 171-0021 (JP)
(74) Representative: Gibbs, Christopher Stephen
(86) International application number: PCT/JP2007/000813
(87) International publication number: WO 2008/015783

(57) **Abstract**

A method for controlling selection of objects in a game machine has: a step of displaying objects on a display unit; a step of detecting a pointing status to recognize a state of a presence/absence of pointing and a pointing commencement position are recognized by a pointing detection unit; a determination step of determining whether or not the pointing commencement position of the pointing is in an object region in a case where pointing is judged to be being executed from a detection result in the pointing status detection step by a pointing continuation determination unit; a step of storing, when a determination result in the determination step is that the pointing is not in an object region, in a storage unit, as an active object, the object that undergoes pointing while the pointing continuation determination is being performed; and a step of operating, when a determination result in the determination step is that the pointing is in an object region, the active object by an object operational input unit while the pointing continuation determination is being performed. In this way, operations such as those relating to selecting and moving multiple objects, which require operations using an operational input unit for multiple character objects, can be provided to a player, using a simply operable and ordinary widespread pointing input device.

## Description

### TECHNICAL FIELD

The present invention relates to a method for controlling selection of multiple objects displayed on a display device, a game apparatus using the same, and programs for controlling execution of the method.

### BACKGROUND ART

Game apparatuses based on computer control include game devices installed in facilities such as game centers (hereinafter, these game devices are referred to as arcade game device), home game apparatuses that are installed as home-use game devices (hereinafter, home game device), and game apparatuses that are portable by a player (hereinafter referred to as portable game device).

Furthermore, one type of game executed on game devices is competitive games. Moreover, one type of competitive game is a game in which a single object operated by the player is in 1-on-1 competition against an object operated by a computer or an opponent player, or a game in which the player simultaneously operates multiple objects to advance in competition against an opponent player.

The latter game is a game such as a soccer game or a war battle game or the like in which unit groups constituted by a single or multiple units fight against each other, and since it is necessary for multiple objects to be moved and operated simultaneously during the game, these games have almost entirely been executed in arcade game machines as described in patent document 1 (Japanese Patent Publication No. 3736440), in which a large scale input panel is used and multiple operational members placed on the input panel are operated by two hands, thereby operating the corresponding objects displayed on the game screen.

On the other hand, in the aforementioned home game devices and portable game devices, there are configurations in which pointing operations are detected by touching a tablet or a touch panel with a stylus pen or the like, thereby enabling operation of corresponding objects displayed on the game screen (for example, patent documents 2: Japanese Laid-open Patent Publication No. 2006-136638 and 3: Japanese Laid-open Patent Publication H11-184585).

In the game apparatus according to the invention described in the above-mentioned patent document 1, specifically, each character or object that appears in the competitive game is caused to correspond to a card, and an arrangement of the plurality of cards placed on a special panel, which is penetrated by an identifying light beam, is operated by the player.

Each of the cards is identified by a detection unit arranged under the panel, and changes in the arrangement positions can be inputted as an operation signal. Then, by detecting the operation signals of the objects in the game as input signals corresponding to the respective cards in response to changes in the arrangement positions of the cards, the development of the game is changed and the game can be advanced.

When attempting to execute this game, which is executed on an arcade game device, in a similar manner on a portable game device, a process is necessary of simultaneously specifying cards or the like, which are multiple corresponding operation members for simultaneously controlling the plurality of objects present in the game.

Further still, in addition to conventional directional input keys, the control relating to operations such as specifying and moving objects such as characters displayed on the game screen is now generally carried out using a touch panel and a stylus pen. Although there are various systems for touch panel type pointing devices such as resistance film systems and electromagnetic induction systems, most of those that are currently widespread have a disadvantage in that simultaneous pointing input in multiple locations cannot be detected, and for this reason there has been a problem in that operational control such as that for specifying, moving, and rotating multiple objects simultaneously has not been possible for games having a superior sense of real time qualities.

### DISCLOSURE OF INVENTION

In light of the aforementioned points, the present invention provides for game devices using a touch panel and a stylus pen (pointing device) a method that makes it possible to simultaneously specify multiple character objects and makes it possible to simultaneously control the plurality of specified character objects, as well as a game machine using this method, and a program for executing control of the method.

A first aspect of the present invention that accomplishes the foregoing issues includes a method for controlling selection of objects in a game machine having a display unit that displays objects, a pointing detection unit that detects a presence/absence of pointing and coordinates that have been pointed at, a pointing continuation determination unit that determines whether or not pointing is continuing, an active status storage unit that stores a selected object as an active object, and an object operational input unit that operates a display position of the object on the display unit, the method having: a step of displaying objects on the display unit, a step of detecting a pointing status to recognize a state of a presence/absence of pointing and a pointing commencement position by the pointing detection unit; a determination step of determining whether or not the pointing commencement position of the pointing is in an object region in a case where pointing is judged to be being executed from a detection result in the pointing status detection step by the pointing continuation determination unit; a step of storing, when a determination result in the determination step is that the pointing is not in an object region, in the storage unit, as an active object, an object that undergoes pointing while the pointing continuation determination is being performed; and a step of operating, when a determination result in the determination step is that the pointing is in an object region, the active object by the object operational input unit while the pointing continuation determination is being performed.

The above-described first aspect further includes a step of displaying a pointing marker that indicates a pointing position in a corresponding position on the display unit in accordance with pointing coordinates that have been detected in the pointing detection step.

Further still, the above-described first aspect includes a step of continuing to display a pointing marker in a coordinate position of a last-detected pointing when pointing is not detected by the pointing detection unit.

A second aspect of the present invention that accomplishes the foregoing issues includes a game machine having a display unit that displays objects, a pointing detection unit that detects a presence/absence of pointing and coordinates that have been pointed at, a continuation determination unit that determines whether or not pointing is continuing, an active status storage unit that stores a selected object as an active object, and an object operational input unit that operates a display position of the object on the display unit, wherein a state of a presence/absence of pointing and a pointing commencement position are recognized by the pointing detection unit, whether or not the pointing commencement position of the pointing is in an object region is determined from a recognition result of the pointing status and the pointing commencement position from the continuation determination unit, and in a case where a determination result is that the pointing is not in an object region, an object that undergoes pointing is stored in the storage unit as an active object while the pointing continuation determination is being performed, and, in a case where the pointing commencement position is determined to be in an object region, control is performed to move display positions on the display unit of the objects as active objects using the object operational input unit while the pointing continuation determination is being performed by the continuation determination unit.

A third aspect of the present invention that accomplishes the foregoing issues includes a program executed on a game machine that is provided with a display unit that displays objects, a pointing detection unit that detects a presence/absence of pointing and coordinates that have been pointed at, a continuation determination unit that determines whether or not pointing is continuing, and an active status storage unit that stores a selected object as an active object, having a step of displaying objects using the display unit, a step of detecting a pointing status in which a state of a presence/absence of pointing and a pointing commencement position are recognized by the pointing detection unit, a determination step of determining whether or not the pointing commencement position of the pointing is in an object region in a case where pointing is judged to be being executed from a detection result in the pointing status detection step by the continuation determination unit, and, in a case where a determination result of the determination step is that the pointing is not in an object region, a step of storing in the storage unit as an active object the object that undergoes pointing while the pointing continuation determination is being performed, and, in a case where a determination result of the determination step is that the pointing is in an object region, a step of operating the active object using the object operational input unit while the pointing continuation determination is being performed.

### BRIEF DESCRIPTION OF THE DRAWINGS

FIG. 1 is a diagram showing an external view of a portable game device in which is applied a method for controlling selection and movement of objects according to the present invention.
FIG. 2 is a block diagram of control of the game device of FIG. 1.
FIG. 3A is a diagram for describing one configuration example concept of a touch panel and shows an electrode structure of the touch panel.
FIG. 3B is a diagram for describing one configuration example concept of a touch panel and shows scanning timings.
FIG. 4A is a diagram showing a (first) example in which a character object is being selected for movement control.
FIG. 4B is a diagram showing a (second) example in which a character object is being selected for movement control.
FIG. 4C is a diagram showing a impact (collision or encounter) determination of a targeted object in a case where character objects are being displayed on a game screen.
FIG. 5A is a diagram showing multiple character objects displayed in card shapes on a first display screen corresponding to FIG. 4A.
FIG. 5B is a diagram showing multiple character objects displayed in card shapes on a first display screen corresponding to FIG. 4B.
FIG. 6A is a diagram for describing how selected character objects corresponding to FIG. 4A are moved and controlled.
FIG. 6B is a diagram for describing how selected character objects corresponding to FIG. 4B are moved and controlled.
FIG. 7A is diagram for describing an extended use of the present invention and shows multiple character objects that have been selected.
FIG. 7B is diagram for describing an extended use of the present invention and shows multiple selected character objects being rotated and controlled.
FIG. 8A is a flowchart (flowchart 1) showing a procedure of a working example method according to the present invention.
FIG. 8B is a flowchart (flowchart 2) showing a procedure of a working example method according to the present invention.
FIG. 9 is a diagram for describing regions stored in a RAM.
FIG. 10A is a diagram showing flags and the like necessary in touch point processing.
FIG. 10B is a diagram showing data of the character objects.

### BEST MODE FOR CARRYING OUT THE INVENTION

Hereinafter, embodiments of the present invention are described with reference to the accompanying drawings.

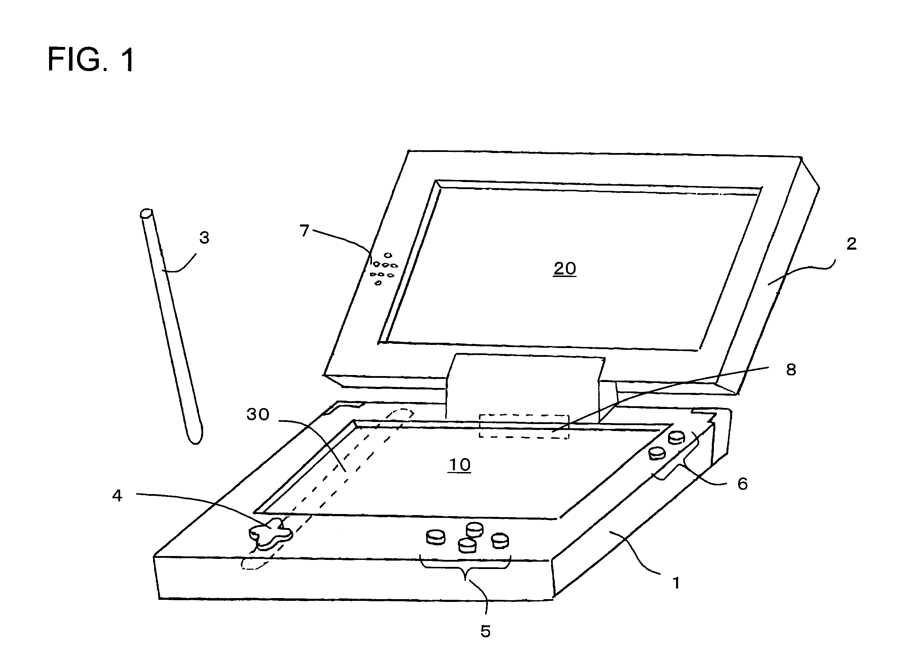

FIG. 1 is a diagram showing an external view of a portable game device in which is applied an operational input method relating to selection and movement control of objects according to the present invention.

A first display screen 10 is present on one side of a main unit portion 1 and a second display screen 20 is present on a folding lid portion 2 side.

The main unit portion 1 is provided with a cross shaped direction input key 4, various control buttons 5, and a power ON/OFF switch 6. A speaker 7 is provided in the lid portion 2.

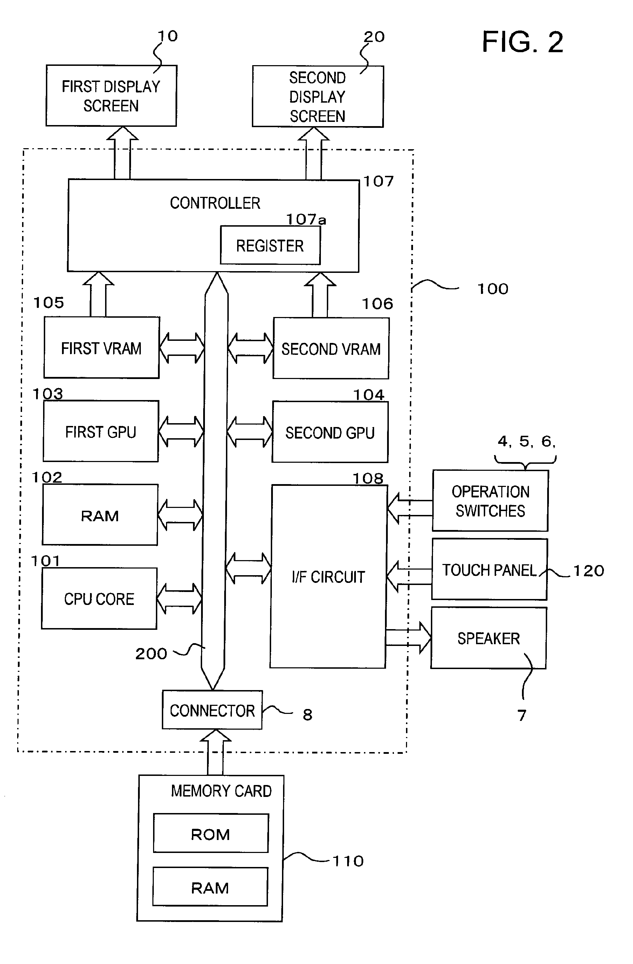

FIG. 2 is a block diagram of control of the game device of FIG. 1. A main control circuit portion 100 shown in FIG. 2 is built into the main unit portion 1.

A memory card 110, which is an external memory, inserts into a connector 8 formed on a rear surface side of the main unit portion 1 and connects to the main control circuit portion 100.

Structural functional portions of the main control circuit portion 100 are connected by an internal bus 200. Examples of the structural functional portions include a CPU core 101 that performs overall control of the game device, a RAM 102 that stores data during execution of the program, and a first graphics processing unit (GPU) 103 and a second GPU 104 that control the display on a first display screen 10 and a second display screen 20 respectively.

The first display screen 10 and the second display screen 20 are constituted by liquid crystal display panels (LCD) for example.

Further still, the main control circuit portion 100 is provided with a first video memory (VRAM) 105 and a second video memory (VRAM) 106 that draw and store in single field portions the image data that is generated by the first GPU 103 and the second GPU 104 and is to be displayed on the first display screen 10 and the second display screen 20.

The image data of the first video memory (VRAM) 105 and the second video memory (VRAM) 106 is displayed on the first display screen 10 and the second display screen 20 via a controller 107. That is, the controller 107 displays the image data of the first video memory (VRAM) 105 and the second video memory (VRAM) 106 by scanning electrodes of X coordinates and Y coordinates to control the driving of XY coordinate dot positions corresponding to the first display screen 10 and the second display screen 20.

Further still, a register 107a sets zero or one in response to a command from the CPU core 101, and in response to the values that have been set in the register 107a, the controller 107 outputs to the first display screen 10 the game image drawn by the first video memory (VRAM) 105 or outputs to the second display screen 20 the game image drawn by the second video memory (VRAM) 106.

On the other hand, the outputs of the cross shaped direction input key 4, the various control buttons 5, and the power ON/OFF switch 6 are connected to the internal bus via an interface circuit 108. Furthermore, a voice is output via the interface circuit to the speaker 7.

Here, a touch panel 120 is formed on a surface of the first display screen 10. The output of the touch panel 120 is inputted via the interface circuit 108.

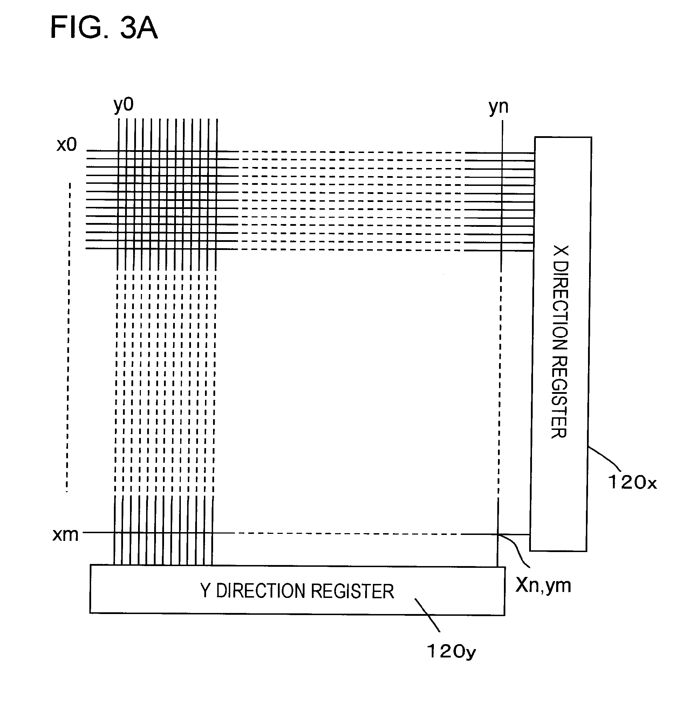

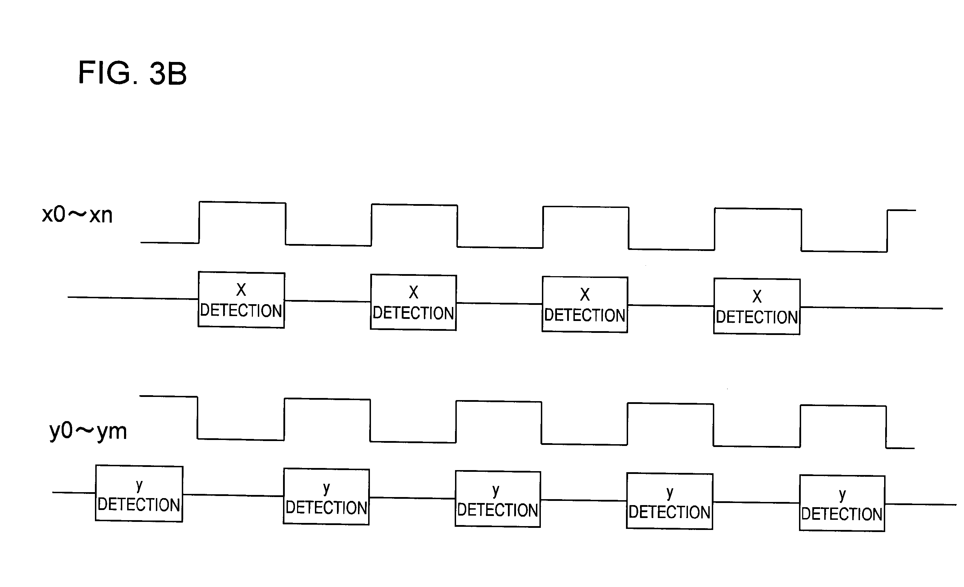

Operations in this touch panel 120 are related to aspects of the present invention. FIG. 3A and FIG. 3B are diagrams for describing one configuration example concept of the touch panel. The touch panel 120 is configured have a same structure as the configuration described in the aforementioned patent document 3 (Japanese Laid-open Patent Publication H11-184585).

That is, FIG. 3A shows an electrode structure of the touch panel 120, wherein two transparent sheets formed as electrode films of multiple X coordinate electrodes (x0 to xn) and Y coordinate electrodes (y0 to ym) respectively are superimposed on the first display screen 10.

For example, a common constant voltage is applied to the electrodes of one of the sheets, and when pressure is applied to an intersection of the X coordinate electrodes (x0 to xn) and the Y coordinate electrodes (y0 to ym) by a stylus pen 3 as a pointing device, which is held by a holding portion 30 at a rear surface of the main unit portion 1, contact is made with the intersection such that a voltage variation occurs. This is scanned and detected at the X direction register 120x and the Y direction register 120y at scanning timings shown in FIG. 3B such that the XY coordinates of where the stylus pen 3 is positioned are detected.

This description regarding the structure of the touch panel 120 is a single example and various other configuration systems are possible for the touch panel 120, but the configuration system thereof is of no concern in applying the present invention. In short, it is sufficient for it to be a system in which the XY coordinate position indicated by the stylus pen 3 on the first display screen 10 is detected.

Returning to FIG. 2, the coordinate position data (xi, yj) indicated by the stylus pen 3 from the touch panel 120 is read by the CPU core 101 via the interface circuit 108 of the main control circuit portion 100.

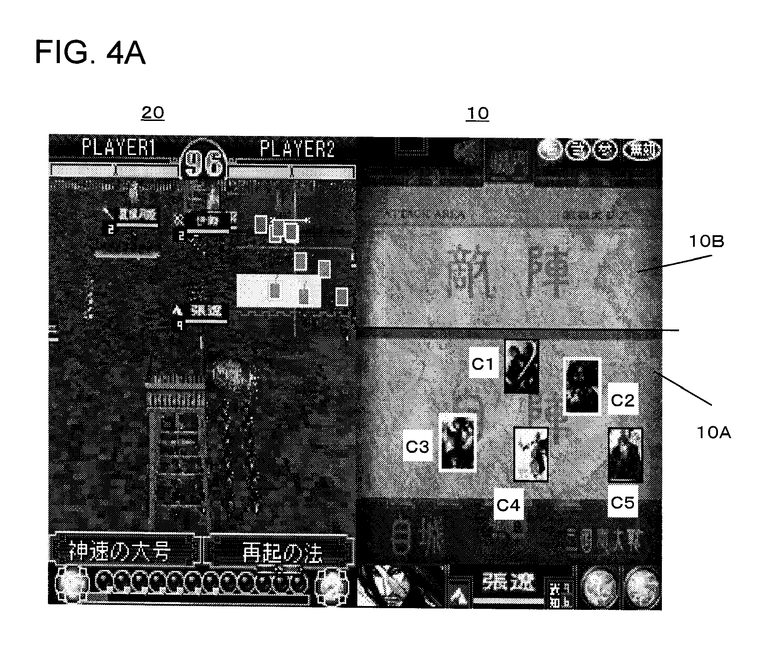

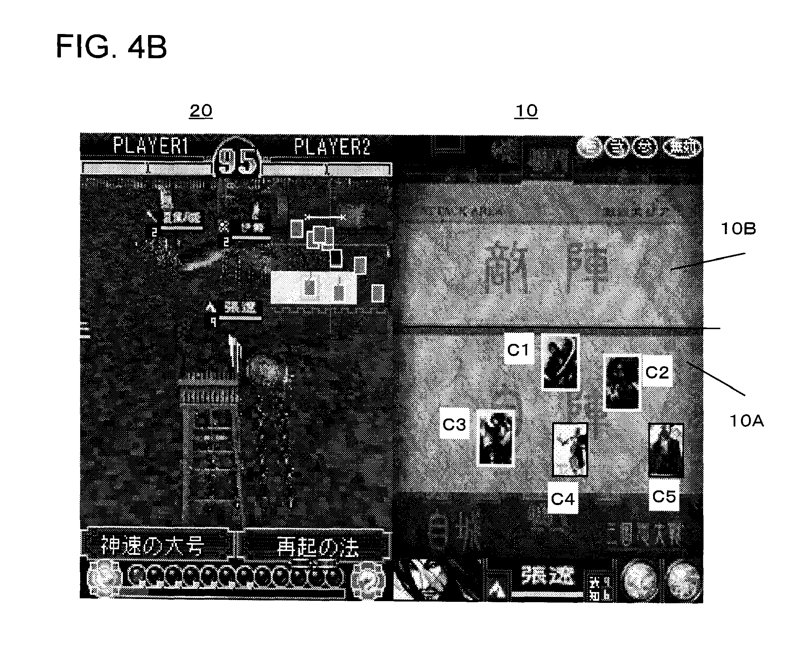

FIG. 4A and FIG. 4B show examples of game screens displayed on the first display screen 10 and the second display screen 20 in the competitive game.

In the examples shown in FIG. 4A and FIG. 4B, the character objects displayed on the first display screen 10 are used for movement control via the touch panel 120. Character objects C2 and C3 in FIG. 4A and character objects C1, C2, and C3 in FIG. 4B are selected for movement control.

Further still, in the second display screen 20, game images during progress of the game are displayed in accordance with the game program accompanying movement of the character objects that have been controlled in the first display screen 10.

That is, in FIG. 4A and FIG. 4B, the plurality of fighter characters such as generals and tacticians that appear in the battle game are displayed as cards in the first display screen 10, and are displayed in a state similarly lined up as the cards whose arrangement positions and angles are operated by the player as described in the foregoing patent document 1.

Further still, an own-position region 10A and an enemy position region 10B are displayed on the first display screen 10, and the plurality of card shaped character objects C1 to C5 selected by the player or determined in accordance with the program are displayed within the own-position region as an initial setting.

Accordingly, the player advances the game by moving and controlling the plurality of character objects C1 to C5 displayed within the own-position region while observing game scenes displayed in the second display screen 20.

There are cases where simultaneously operating the plurality of characters in the development of the game at this time is necessary for favorably developing the game.

Conventionally, in these cases, the player pushes a control button not shown in the diagram to enter a mode for selecting multiple characters as one conceivable method for entering a control mode by which multiple characters are moved in advance, and following this, a process has been necessary of achieving an active state in advance by selecting the plurality of targeted characters. However, in the case of processing such as this, extremely complicated tasks occur involving, for example, the player holding the portable game device main unit in one hand while operating the stylus pen with the other hand, then pressing an extra control button with a free finger even though the pen or the main unit is being held, and therefore operability is poor and as a result there is the disadvantage of interest being diminished.

Accordingly, the present invention makes it possible to simultaneously move and control multiple characters by simply operating only the stylus pen to avoid such complicated processing.

Here, in order to facilitate understanding of the invention, an outline of control according to the present invention is described first.

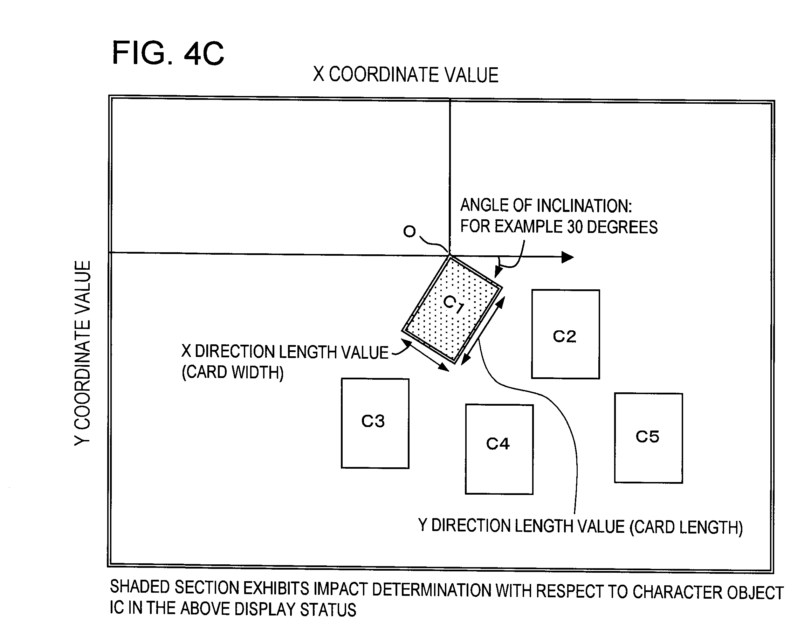

FIG. 4C indicates parameters for performing internal processing of the operation screen regarding the character object C1 within the own-position area of FIG. 4A. In this case, values that are set as internal parameters for the character object C1 taking the form of a card include an X coordinate value and a Y coordinate value of an upper left vertex, which is a reference point in the virtual space in the game where the object C1 is present, X direction and Y direction length values, which are a reference for an impact (encounter or collision) determination when pointing has been performed by the stylus pen, an angle of inclination that indicates how tilted [the object C1] is from a reference angle, and an active flag that indicates whether or not the object C1 is currently being selected, as well as an ID value that indicates a type, an HP value that indicates a health power, and an MP value that indicates a mental power of the corresponding character in the game. These parameters are also set for the other character objects C2 to C5 respectively, and although the form and size of the objects are common in the present working example, these may also be changed in response to the type of character corresponding to these depending on the type of game.

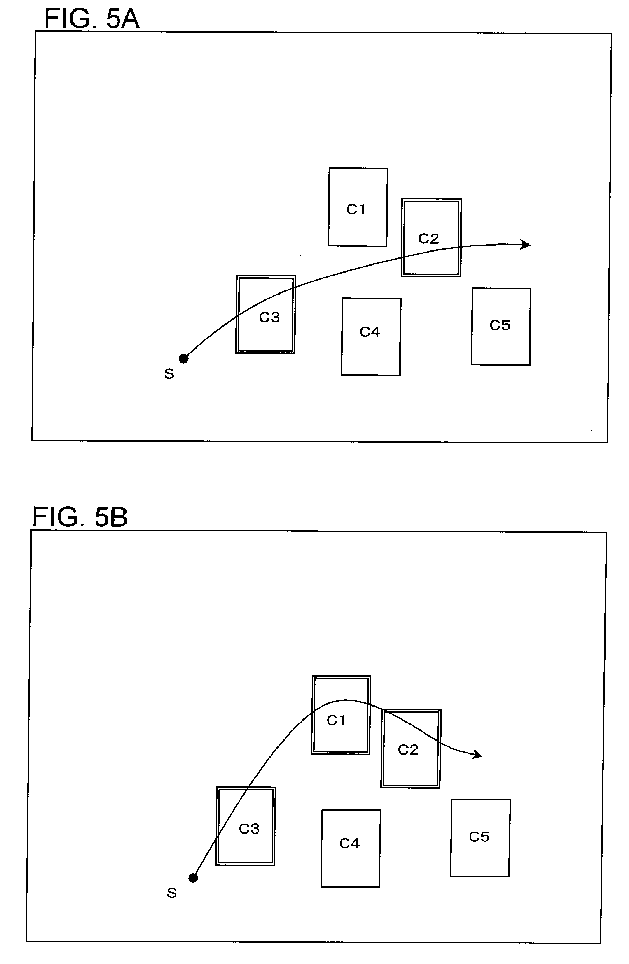

FIG. 5A and FIG. 5B correspond to FIG. 4A and FIG. 4B respectively and show only the plurality of character objects C1 to C5 in the first display screen 10 indicated in a card shape.

FIG. 5A shows how, of the character objects C1 to C5, the character objects C2 and C3 have been put in an active state, and FIG. 5B shows how, of the character objects Cl to C5, the character objects C1, C2, and C3 have been put in an active state.

To put the character objects into an active state in this manner, the stylus pen 3 touches a point S other than the regions in which the character objects are displayed on the first display screen 10. In this state, it is detected that the stylus pen 3 has pointed to a field other than the character objects of the display screen 10.

Then, with the point S that has been initially pointed to as a start and while touched against the first display screen 10, the stylus pen is moved while tracing over the character objects on the game screen desired to be put in an active state (character objects C2 and C3 in FIG. 5A and character objects C1, C2, and C3 in FIG. 5B).

In this state, when it is determined that the touch (contact) of the stylus pen 3 against the display screen 10 is continuing and is tracing over the character objects, a detection is performed as to whether or not the point position is on a character object. Then, any character object traced over by the stylus pen 3 is put into an active state.

A method for detecting whether or not the point position at this time matches a character object is carried out using an impact (collision or encounter) determination process as is described later, and the details of this are described later.

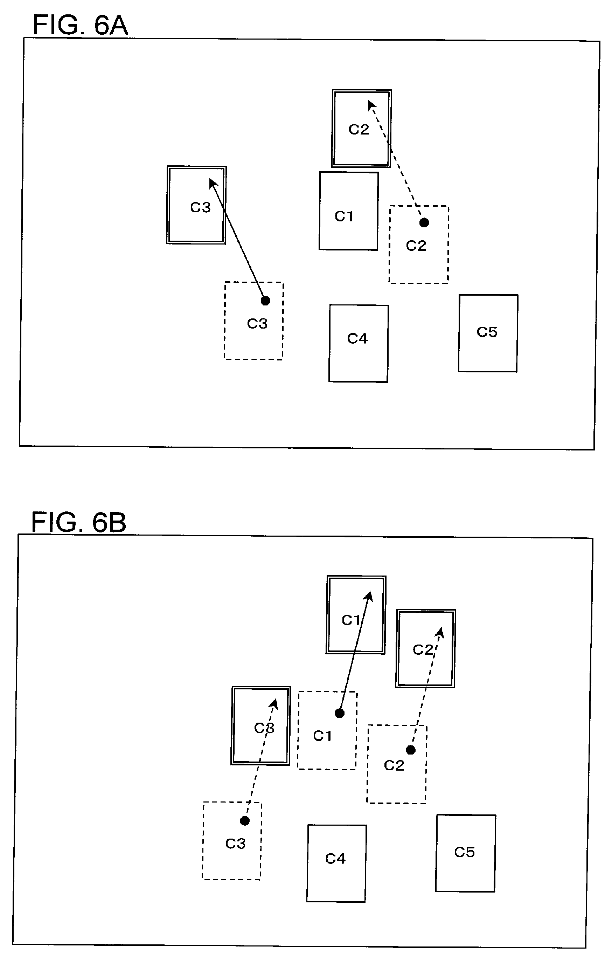

In the present invention, when any of the character objects of the plurality of character objects in an active state is dragged (moved on the display screen), the other characters in an active state are simultaneously moved and controlled by an equivalent movement amount. FIG. 6A and FIG. 6B show these states.

FIG. 6A shows that when the character object C3 is dragged in the arrow direction, the character object C2, which is in an active state, also is moved and controlled similarly by a same amount in the same direction.

FIG. 6B shows that when the character object C1 is dragged in the arrow direction, the other character objects C2 and C3, which are in an active state, also are moved and controlled similarly by a same amount in the same direction.

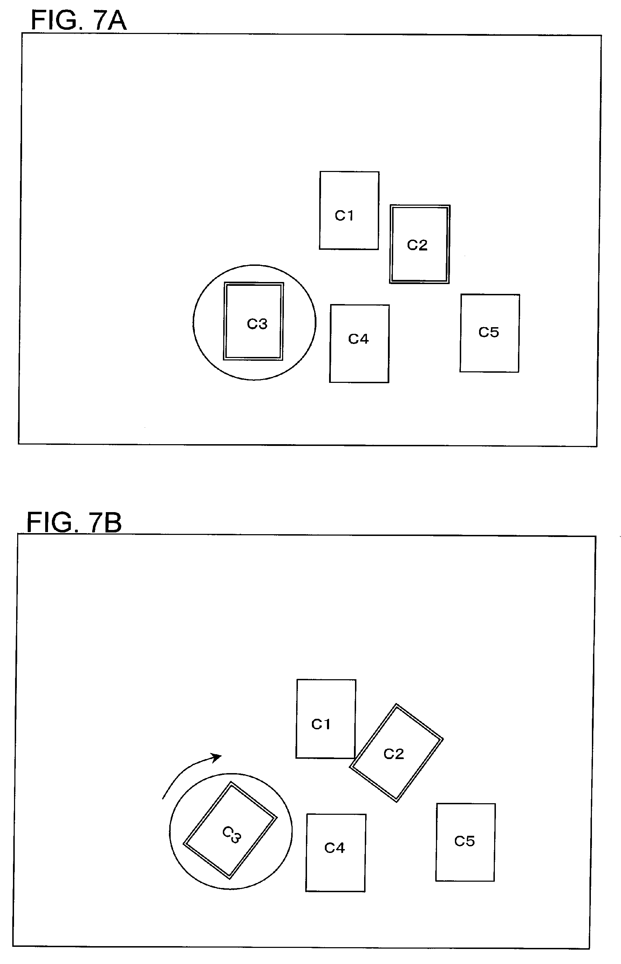

FIG. 7A and FIG. 7B are diagrams for describing an extended use of the present invention. FIG. 7A shows how multiple character objects are put into an active state and set for rotation control. That is, when a setting for rotation control is carried out on the character object C3, a circular mask display is formed around the character object C3. Then, when the inclination of the character object C3 is changed in response to input of a desired angle of rotation along the circular mask display, the other character object C2 in an active state is similarly controlled to rotate by a same angle as shown in FIG. 7B.

In a same manner as described above, with the present invention, it is possible to simultaneously move and control multiple character objects in an active state, and rotational control can also be achieved. Accordingly, movement control of the character objects described above defines a meaning of various operational input controls including rotational control as a technical idea of the present invention.

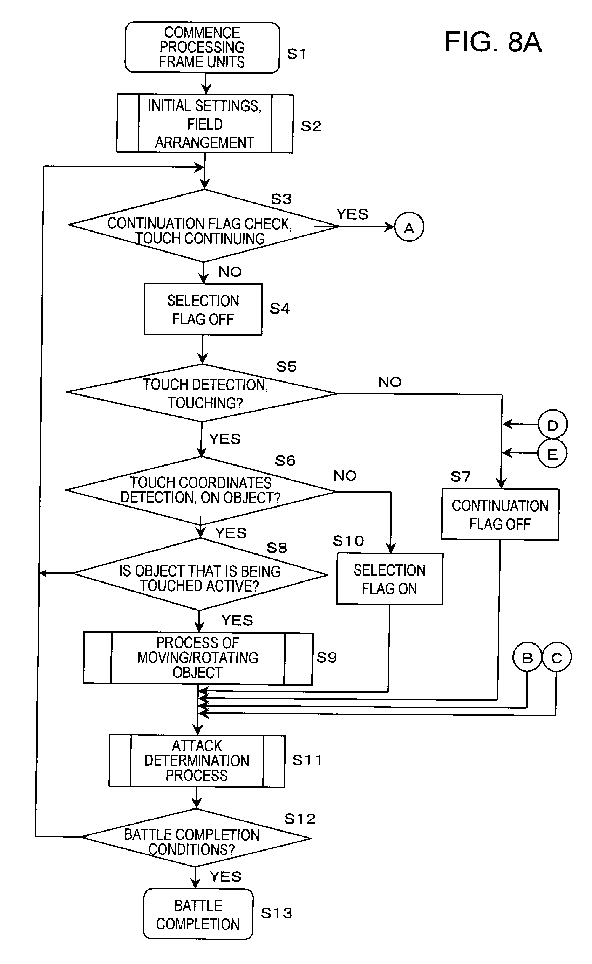

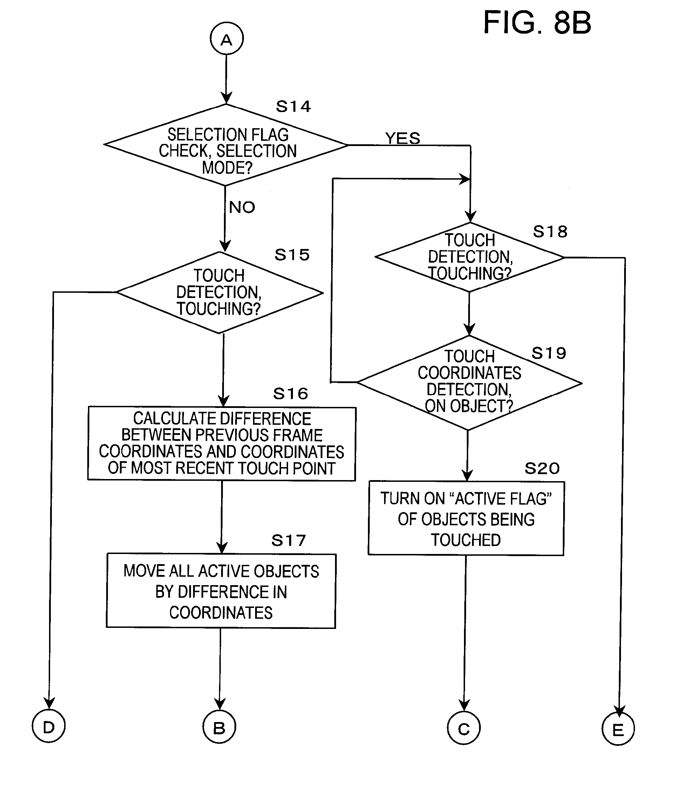

FIG. 8A and FIG. 8B are flowcharts (flowcharts 1 and 2) showing a procedure of the method of the working example corresponding to a feature of the present invention. Further features of the present invention are described in accordance with these flowcharts with reference to the above-described functional block diagrams when appropriate.

It should be noted that the processing corresponding to the flows shown in FIG. 8A and FIG. 8B is executed and controlled by the CPU core 101 by the reading in of a game main processing program (game program) stored on a ROM of the external memory 110 inserted into the connector 8 into the RAM 102.

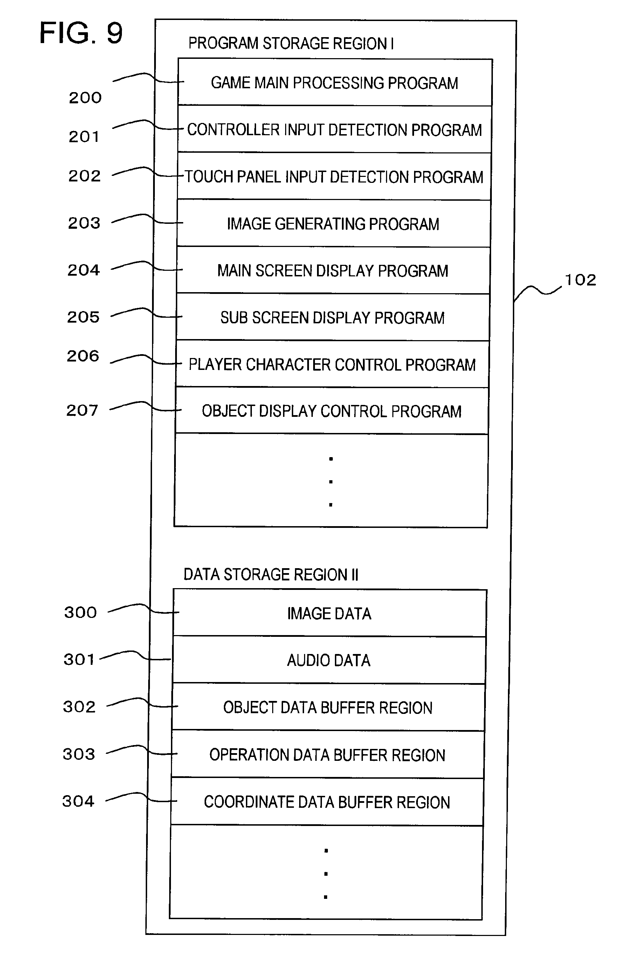

FIG. 9 is a diagram for describing regions contained in the RAM 102. A program storage region I and a data storage region II are provided.

In addition to storing a game main processing program 200, the program storage region I stores an input detection program 201 of the controller 107, a touch panel input detection program 202, an image generating program 203, a main screen (first display screen 10) display program 204, a sub screen (second display screen 20) display program 205, a player character control program 206, and an object display control program 207.

Further still, the data storage region II stores image data 300, audio data 301, an object buffer region 302, an operation data buffer region 303, and a coordinate data buffer region 304, and the like.

Returning to the flow shown in FIG. 8A for description, processing commences in frame units (step S1). An arrangement of the character objects in the field is carried out as an initial setting. That is, a predetermined number of card-shaped character objects (in the example shown in FIG. 4A and FIG. 4B, the five character objects C1 to C5) are displayed in the own-position region 10A of the first display screen 10 (step S2).

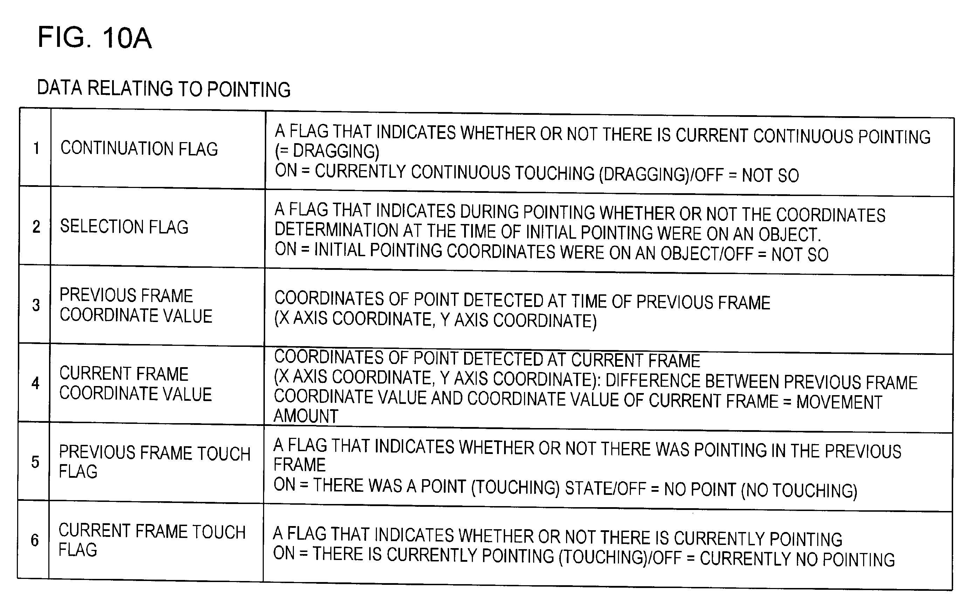

At this time, information necessary in touch point processing of the stylus pen 3 is generated in the operation data buffer region 303 of the RAM 102 as shown in FIG. 10A, which is a diagram for describing flags and the like necessary in touch point processing.

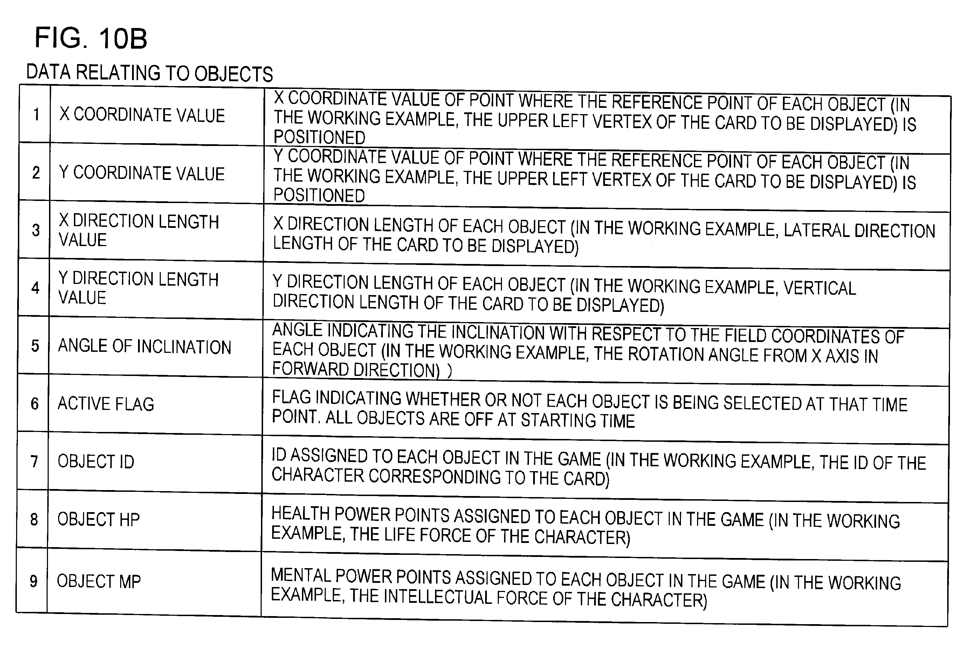

Furthermore, as shown in FIG. 10B, which is for describing the data of each character object, information of each character object is set in the object buffer region 302 and the coordinate data buffer region 304 for each character object.

Next, a continuation flag is checked to determine whether or not the touch is continuing (step S3). Here, as shown in FIG. 10A, the continuation flag is a flag indicating that the stylus pen 3 is already currently touching the first display screen. When this flag is set "ON," this signifies "currently touching."

Since this is an initial state, the continuation flag is set to "OFF," (NO at step S3), and there is no current continuation of touching. That is, there is a state of a new touch or no touching.

At this time, a selection flag is turned OFF (step S4). That is, as shown in FIG. 10A, the selection flag is a flag indicating whether or not the point at the initial time of touching was on a character object. When the selection flag is set ON, this signifies that the character object is being pointed at. Accordingly, since the stylus pen 3 is on the point S shown in FIG. 5A and FIG. 5B, the selection flag is set OFF as described above.

Further still, if the first display screen 10 is touched while determining (step S5) whether or not the stylus pen 3 is touching the first display screen 10, the coordinate position of the touch is detected and a determination is performed as to whether or not the detected coordinates are on a character object (step S6).

Here, the determination of whether or not the touch coordinate position is on a character object is carried out using an impact determination process. That is, as shown in FIG. 10B, each of the character objects is provided with an X coordinate value and a Y coordinate value of a point at which the reference point of each character object (upper left vertex of rectangle in the working example) is positioned, an X direction length value (the X direction length of each character object, which is common for all objects), and a Y direction length value (the Y direction length of each character object, which is common for all objects).

Also provided is an angle of inclination, which is an angle indicating the inclination with respect to the field coordinates of each object (in this working example this is a rotation angle from the X axis forward direction).

Accordingly, the coordinate values specify where each character object occupies the first display screen 10 as a region. The impact determination process determines whether or not there is a match between any of the coordinate values within the region occupied by the particular character object and the coordinate values where the stylus pen 3 is pointing.

Returning to FIG. 8A, at step S5, in a case where the stylus pen 3 is not touching the first display screen 10, the continuation flag is set to OFF (step S7). Further still, in a case where the stylus pen 3 is on a character object (YES at step S6), a determination is performed as to whether or not the object being touched is in an active state (step S8).

Whether or not it is in an active state is determined by whether or not the active flag of the corresponding character object ID shown in FIG. 10B is set.

In a case where the object being touched is in an active state (YES at step S8), the character object can undergo a dragging movement individually or a rotation process can be carried out (step S9). If the object being touched is not in an active state at step S8, the procedure returns to step S3.

Furthermore, in a case where coordinates detected at step S6 are not on a character object (NO at step S6), the selection flag in the field is turned ON for the coordinate position being touch by the stylus pen 3 (step S10).

Following this, an attack determination process is carried out (step S11) in response to the game progress and when battle completion conditions are met (YES at step S12), processing finishes (step S13). When the battle completion conditions are not met, the procedure returns to the processing of step S3 (NO at step S12).

Further still, at step S3, the continuation flag is checked, and if there is a continuous touch state (YES at step S3), then the procedure transitions to the processing of FIG. 8B, then the selection flag is checked and a determination is performed as to whether or not [the game] is in selection mode (step S14).

If it is in selection mode (YES at step S14), then a detection is performed for whether or not there is touching (step S18). If there is no touching, then the continuation flag is turned OFF (NO at step S18, then step S7).

When it is determined that there is touching (YES at step S18), the coordinate position being touched is determined, and a judgment is performed based on the above-described impact determination process as to whether or not it is on a character object (step S19). If it is on a character object, then an active flag is set for that character object. As shown in FIG. 10B, the active flag is a flag that indicates whether or not each character object is being selected, and at the game commencement in the working example, all objects are set to "OFF."

At step S14, the selection flag is checked and if [the game] is not in selection mode (NO at step S14), then it is in a mode in which the object is dragged, and a detection is performed as to whether or not it is being touched (step S15). If it is not being touched (NO at step S15), then the continuation flag is set to OFF (step S7).

Conversely, when it is detected that the touch state is being maintained (YES at step S15), a difference is obtained between a previous frame coordinate value and a currently touched frame coordinate value (step S16).

The previous frame coordinate value is a coordinate value of the point that was being touched during the previous frame, and the current frame coordinate value is a coordinate value of the point currently being touched. The difference between the previous frame coordinate value and the coordinate value of the current frame being touched corresponds to a movement amount.

Next, the coordinate values of all the character objects in the active state are shifted by the obtained movement amount, and changed and moved to new coordinate values (step S17).

As described above, with the present invention, while multiple character objects are being displayed, multiple character objects are put into an active state by pointing the stylus pen at a region other than a character object, namely, a field region, then further continuing this by moving the touching position of the stylus pen while tracing over the character objects to be specified.

Then, by dragging and moving any of the plurality of character objects that are in an active state, the other character objects in an active state can be dragged and moved simultaneously.

Furthermore, it is not only dragging movements, when carrying out a rotation operation on any of the character objects, other character objects can also be controlled so as to rotate simultaneously.

It should be noted that the description of the foregoing working example describes a case in which the stylus pen 3 is used to point at coordinate positions on the display screen, but it is also possible to point to positions on the display screen using a fingertip or the like. Accordingly, when stylus pen is referred to in the present invention, it signifies that cases where pointing can be achieved without this stylus pen are included.

Furthermore, the description of the foregoing working example describes a touch screen system in which touch sensors of transparent resistance film systems are superimposed and arranged on a display device on which objects are displayed on a game screen, but applications of the present invention are not limited to this and is also executable for example with a mouse and a tablet provided with a click input detection unit that corresponds to a touch signal and a detection unit for X axis and Y axis coordinate values.

In this case, unlike the touch screen system, the relationship of matching between the coordinates currently being pointed at and the coordinates of the character object in the virtual space of the game displayed on the display unit is not readily evident, and therefore it is preferable to display a pointing marker that indicates the coordinate positions such as a mouse pointer. In this way the present invention is not limited to touch screen methods and is also capable of providing a processing method that is easy to understand for a player when for example using a pointing detection unit in which the display region and the pointing region are different, such as a touch pad or the like for a PC using a pressure-sensitive system or an electrostatic system.

Furthermore, when using mouse operations for example to handle this case, there may be times when it is unclear at which position pointing recommenced when pointing has again been input after a state in which pointing was not detected, but for a case such as this, it is possible to avoid confusion by displaying a marker that is different from the ordinary marker in the coordinate position that was last detected.

### INDUSTRIAL APPLICABILITY

With the above-described processing, operations such as those relating to selecting and moving multiple objects, which conventionally require operations using an operational input unit for multiple character objects, can be provided to a player using a simple operation and through an ordinary widespread pointing input device.

## Claims

1. A method for controlling selection of objects in a game device 1 having a display unit that displays objects, a pointing detection unit that detects a presence/absence of pointing and coordinates that have been pointed at, a pointing continuation determination unit that determines whether or not pointing is continuing, an active status storage unit that stores a selected object as an active object, and an object operational input unit that operates a display position of the object on the display unit, the method comprising:
displaying objects on the display unit;
detecting a pointing status to recognize a state of a presence/absence of pointing and a pointing commencement position by the pointing detection unit;
determining whether or not the pointing commencement position of the pointing is in an object region in a case where pointing is judged to be being executed from a detection result in the pointing status detection step by the pointing continuation determination unit;
storing, when a determination result in the determination step is that the pointing is not in the object region, in the storage unit, as an active object, an object that undergoes pointing while the pointing continuation determination is being performed; and
operating, when a determination result in the determination step is that the pointing is in an object region, the active object by the object operational input unit while the pointing continuation determination is being performed.

2. The method for controlling selection of objects according to claim 1, further comprising:
displaying a pointing marker that indicates a pointing position in a corresponding position on the display unit in accordance with pointing coordinates that have been detected in the pointing detection step.

3. The method for controlling objects according to claim 1 or 2, further comprising:
continuing to display a pointing marker in a coordinate position of a last-detected pointing when pointing is not detected in the pointing detection step.

4. A game apparatus, comprising:
a display unit to display objects;
a pointing detection unit to detect a presence/absence of pointing and coordinates that have been pointed at;
a continuation determination unit to determine whether or not pointing is continuing;
an active status storage unit to store a selected object as an active object; and
an object operational input unit to operate a display position of the object on the display unit, wherein
a state of a presence/absence of pointing and a pointing commencement position are recognized by the pointing detection unit,
whether or not the pointing commencement position of the pointing is in an object region is determined from a recognition result of the pointing status and the pointing commencement position by the continuation determination unit,
in a case where the determination result is that the pointing is not in an object region, the object that undergoes pointing is stored in the storage unit as an active object while the pointing continuation determination is being performed, and
in a case where the pointing commencement position is determined to be in an object region, control is performed to move the display position on the display unit of the object as the active object by the object operational input unit while the pointing continuation determination is being performed by the continuation determination unit.

5. A program stored in a storage medium, which is readable and executable by a game device having a display unit that displays objects, a pointing detection unit that detects a presence/absence of pointing and coordinates that have been pointed at, a continuation determination unit that determines whether or not pointing is continuing, and an active status storage unit that stores a selected object as an active object, when the program is executed, the game device is made to perform:
displaying objects by the display unit;
detecting a pointing status to recognize state of a presence/absence of pointing and a pointing commencement position are recognized by the pointing detection unit;
determining whether or not the pointing commencement position of the pointing is in an object region in a case where pointing is judged to be being executed from a detection result in the pointing status detection step by the continuation determination unit;
storing, when a determination result in the determination step is that the pointing is not in an object region, in the storage unit, as an active object, the object that undergoes pointing while the pointing continuation determination is being performed; and
operating, when a determination result in the determination step is that the pointing is in an object region, the active object by the object operational input unit while the pointing continuation determination is being performed.

## Amended claims

### Amended claims under Art. 19.1 PCT

**1.** (Amended) A method for controlling selection of objects in a game device 1 having a display unit that displays objects, a pointing detection unit that detects a presence/absence of pointing and coordinates that have been pointed at, a pointing continuation determination unit that determines whether or not pointing is continuing, and an active status storage unit that stores a selected object as an active object, the method comprising:
displaying objects on the display unit;
detecting a pointing status to recognize a state of a presence/absence of pointing and a pointing commencement position by the pointing detection unit;
determining whether or not the pointing commencement position of the pointing is in an object region in a case where pointing is judged to be being executed from a detection result in the pointing status detection step by the pointing continuation determination unit;
storing, when a determination result in the determination step is that the pointing is not in the object region, in the storage unit, as an active object, an object that undergoes pointing while the pointing continuation determination is being performed; and
operating, when a determination result in the determination step is that the pointing is in an object region, the active object by the object operational input unit while the pointing continuation determination is being performed.

**2.** The method for controlling selection of objects according to claim 1, further comprising:
displaying a pointing marker that indicates a pointing position in a corresponding position on the display unit in accordance with pointing coordinates that have been detected in the pointing detection step.

**3.** The method for controlling objects according to claim 1 or 2, further comprising:
continuing to display a pointing marker in a coordinate position of a last-detected pointing when pointing is not detected in the pointing detection step.

**4.** (Amended) A game apparatus, comprising:
a display unit to display objects;
a pointing detection unit to detect a presence/absence of pointing and coordinates that have been pointed at;
a continuation determination unit to determine whether or not pointing is continuing; and
an active status storage unit to store a selected object as an active object;
wherein a state of a presence/absence of pointing and a pointing commencement position are recognized by the pointing detection unit,
whether or not the pointing commencement position of the pointing is in an object region is determined from a recognition result of the pointing status and the pointing commencement position by the continuation determination unit,
in a case where the determination result is that the pointing is not in an object region, the object that undergoes pointing is stored in the storage unit as an active object while the pointing continuation determination is being performed, and
in a case where the pointing commencement position is determined to be in an object region, control is performed to move the display position on the display unit of the object as the active object by the object operational input unit while the pointing continuation determination is being performed by the continuation determination unit.

**5.** A program stored in a storage medium, which is readable and executable by a game device having a display unit that displays objects, a pointing detection unit that detects a presence/absence of pointing and coordinates that have been pointed at, a continuation determination unit that determines whether or not pointing is continuing, and an active status storage unit that stores a selected object as an active object, when the program is executed, the game device is made to perform:
displaying objects by the display unit;
detecting a pointing status to recognize state of a presence/absence of pointing and a pointing commencement position are recognized by the pointing detection unit;
determining whether or not the pointing commencement position of the pointing is in an object region in a case where pointing is judged to be being executed from a detection result in the pointing status detection step by the continuation determination unit;
storing, when a determination result in the determination step is that the pointing is not in an object region, in the storage unit, as an active object, the object that undergoes pointing while the pointing continuation determination is being performed; and
operating, when a determination result in the determination step is that the pointing is in an object region, the active object by the object operational input unit while the pointing continuation determination is being performed.
